# EUROPÄISCHE PATENTSCHRIFT

(11) **EP 3 658 463 B1**
(45) Veröffentlichungstag und Bekanntmachung des Hinweises auf die Patenterteilung: **31.05.2023**
(21) Anmeldenummer: 18722012.4
(22) Anmeldetag: 27.04.2018
(51) Int. Cl.: B64F 5/10, B66F 11/04, B23Q 1/25, B21J 15/14, B25J 5/04

(54) **BEARBEITUNGSANLAGE FÜR FLUGZEUGSTRUKTURBAUTEILE**
MACHINING SYSTEM FOR AIRCRAFT STRUCTURAL COMPONENTS
SYSTÈME D'USINAGE DE COMPOSANTS STRUCTURELS D'AÉRONEF

(30) Priorität: 24.07.2017 DE 102017116719
(43) Veröffentlichungstag der Anmeldung: 03.06.2020
(73) Patentinhaber: Broetje-Automation GmbH, 26180 Rastede (DE)
(72) Erfinder: VARRELMANN, Nils, 26316 Varel (DE)
(74) Vertreter: Gottschald Patentanwälte Partnerschaft mbB
(86) Internationale Anmeldenummer: PCT/EP2018/060901
(87) Internationale Veröffentlichungsnummer: WO 2019/020228

(56) Entgegenhaltungen:
- EP-A1- 1 110 680
- CN-A- 101 817 146
- DE-A1-102013 004 598
- DE-A1-102014 113 663
- US-A- 4 864 702
- US-A- 4 967 947
- US-A- 5 896 637
- US-A- 6 029 352
- US-B1- 6 223 413
- Broetje-Automation Gmbh: "Broetje-Automation IPAC", You Tube, 16. Juli 2012 (2012-07-16), Seite 1, XP054978470, Gefunden im Internet: URL:https://www.youtube.com/watch?v=Q2cQnO JFsLI [gefunden am 2018-06-28]

## Beschreibung

Die Erfindung betrifft eine Bearbeitungsanlage für Flugzeugstrukturbauteile nach dem Oberbegriff des Anspruchs 1 sowie ein Verfahren zur Bearbeitung eines Flugzeugstrukturbauteils mit einer vorschlagsgemäßen Bearbeitungsanlage gemäß dem Oberbegriff des Anspruchs 15.

Die Herstellung von Flugkörpern und insbesondere Flugzeugen umfasst die Bearbeitung großer Flugzeugstrukturbauteile wie etwa der Flügel und des Rumpfes oder Teilen davon in speziellen Bearbeitungsanlagen.

Bearbeitungsanlagen sind aus der CN 101 817 146 A, der US 6 223 413 B1, der US 4,967,947 A und der US 5,896,637 A bekannt. Ferner sind Bearbeitungsanlagen der Broetje-Automation GmbH bekannt, beispielsweise solche, welche unter der Bezeichnung IPAC vertrieben werden.

Aus der US 5,778,505 ist eine Bearbeitungsanlage bekannt, von der die Erfindung ausgeht. Die Bearbeitungsanlage weist eine Bearbeitungsstation mit einem Aufspannrahmen zur Aufnahme des jeweils zu bearbeitenden Flugzeugstrukturbauteils auf. Die Bearbeitungsstation ist ferner mit einer Bearbeitungseinheit in Form einer Nieteinheit ausgestattet, die eine Oberwerkzeugeinheit mit einem Oberwerkzeug und eine zugeordnete Unterwerkzeugeinheit mit einem Unterwerkzeug aufweist, wobei bei einer koaxialen Ausrichtung der Werkzeugachse des Oberwerkzeugs zur Werkzeugachse des Unterwerkzeugs ein Nietvorgang am Flugzeugstrukturbauteil durchgeführt werden kann.

Bei der bekannten Bearbeitungsanlage ist ein Bearbeitungsbereich und ein Servicebereich vorgesehen. Der Bearbeitungsbereich ist ein Raumabschnitt der Bearbeitungsanlage, in welchem die bestimmungsgemäße Bearbeitung des am Aufspannrahmen angeordneten Flugzeugstrukturbauteils mit dem Oberwerkzeug und Unterwerkzeug stattfindet. Der Servicebereich ist ein Raumabschnitt der Bearbeitungsanlage, in welchem Servicearbeiten, beispielsweise Wartungs- und Reparaturarbeiten oder ein Werkzeugwechsel, durchgeführt werden können. Die bekannte Bearbeitungsanlage weist dazu eine Serviceplattform auf, die in einer festen Serviceebene angeordnet ist und die von Servicepersonal betreten werden kann. Über die Serviceplattform der bekannten Bearbeitungsanlage kann das Servicepersonal allerdings nicht sämtliche Werkzeuge erreichen. So ist hier von der Serviceplattform nur die Unterwerkzeugeinheit, also Unterwerkzeug und Unterwerkzeugträger, zugänglich. Für Servicearbeiten an der Oberwerkzeugeinheit, also am Oberwerkzeug und Oberwerkzeugträger, muss das Servicepersonal eine andere Serviceplattform bereitstellen, da die Oberwerkzeugeinheit von der im Servicebereich angeordneten Serviceplattform nicht zugänglich ist. Die weitere Serviceplattform muss dann zumindest abschnittsweise in den Bearbeitungsbereich hineinragen, um das Oberwerkzeug zu erreichen. Servicearbeiten sind daher relativ aufwendig und zeitintensiv.

Der Erfindung liegt das Problem zugrunde, die bekannte Bearbeitungsanlage derart auszugestalten und weiterzubilden, dass Servicearbeiten einfacher ausgeführt werden können.

Das obige Problem wird bei einer Bearbeitungsanlage gemäß dem Oberbegriff von Anspruch 1 durch die Merkmale des kennzeichnenden Teils von Anspruch 1 gelöst.

Wesentlich ist die grundsätzliche Überlegung, das Oberwerkzeug und das Unterwerkzeug derart verfahrbar, insbesondere linear verfahrbar, zu lagern, dass beide Werkzeuge von einer gemeinsamen Serviceplattform aus zugänglich sind. Die Serviceplattform ist dabei in einer festen Serviceebene angeordnet, von der aus beide Werkzeuge erreichbar sind. Die Serviceplattform muss also nicht verlagert werden, um nach Servicearbeiten an einem der Werkzeuge Servicearbeiten an dem jeweils anderen der Werkzeuge vornehmen zu können. Es ist dabei nicht ausgeschlossen, dass die Serviceplattform auch verlagert werden kann, insbesondere von der übrigen Bearbeitungsanlage bzw. von dem Bearbeitungsbereich entfernt werden kann, wenn keine Servicearbeiten durchgeführt werden. Zum Zeitpunkt der Durchführung der Servicearbeiten ist die Serviceplattform aber in besagter, festgelegter Serviceebene angeordnet, von der aus sowohl das Oberwerkzeug als auch das Unterwerkzeug sowie insbesondere auch der jeweils zugeordnete Werkzeugträger zugänglich sind.

"Zugänglich" bzw. "erreichbar" bedeutet, dass das jeweilige Oberwerkzeug bzw. Unterwerkzeug in Reichweite des Servicepersonals bzw. einer Serviceeinrichtung wie einem automatischen Werkzeugwechsler ist.

Indem das Oberwerkzeug und das Unterwerkzeug beide von derselben Serviceplattform zugänglich sind, wenn diese in der vorgegebenen Serviceebene positioniert ist, können Servicearbeiten deutlich einfacher und schneller als beim Stand der Technik durchgeführt werden. Ein weiterer Vorteil ist, dass bei der vorschlagsgemäßen Bearbeitungsanlage der Bearbeitungsbereich vom Servicebereich vollständig getrennt ist, das heißt die Servicearbeiten in einem Bereich oder aus einem Bereich heraus stattfinden, der außerhalb des Bearbeitungsbereichs liegt. Auf diese Weise sind zum Einen keine Umbauarbeiten im Bearbeitungsbereich notwendig und es besteht auch nicht das Risiko, dass unabsichtlich Werkzeugteile oder Anlagenteile nach den Servicearbeiten im Bearbeitungsbereich zurückgelassen werden.

Anspruch 2 definiert, dass das Oberwerkzeug und/oder das Unterwerkzeug in einer Ausgestaltung in seiner bzw. ihrer jeweiligen Serviceposition entweder im Bearbeitungsbereich oder im Servicebereich positioniert sein kann bzw. können. Die Serviceposition muss also nicht zwingend innerhalb des Servicebereichs liegen, sondern grenzt insbesondere an diesen an.

Die Ansprüche 3 und 4 definieren bevorzugte Anordnungsmöglichkeiten des Oberwerkzeugs in seiner jeweiligen Serviceposition.

Die Ansprüche 5 und 6 definieren bevorzugte Anordnungsmöglichkeiten des Unterwerkzeugs in seiner jeweiligen Serviceposition.

Bei der Ausgestaltung gemäß Anspruch 7 ist ein automatischer Werkzeugwechsler vorgesehen, der zwischen einer Parkposition und einer Wechselposition verfahrbar ist. Der automatische Werkzeugwechsler ist in seiner Parkposition insbesondere innerhalb des Servicebereichs und/oder in seiner Wechselposition außerhalb des Servicebereichs, vorzugsweise über dem Unterwerkzeugträger, positioniert.

Die Ansprüche 8 bis 10 betreffen die Anordnung eines Prüfabschnitthalters bezogen auf die jeweilige Serviceposition des Oberwerkzeugs und/oder Unterwerkzeugs. Ein solcher Prüfabschnitthalter dient dazu, einen Prüfabschnitt zu fixieren, an welchem die Funktion des Oberwerkzeugs und/oder Unterwerkzeugs getestet werden kann.

In den Ansprüchen 11 bis 14 ist ein Gestell definiert, an welchem das Oberwerkzeug bzw. der zugeordnete Oberwerkzeugträger und/oder das Unterwerkzeug bzw. der zugeordnete Unterwerkzeugträger gelagert sein können. Das Gestell kann C-förmig oder portalförmig ausgebildet sein und begrenzt zumindest zu einer Seite, also in Querrichtung, den Bearbeitungsbereich. Der Bearbeitungsbereich endet also an der Innenseite des besagten seitlichen Gestellteils. Bevorzugt grenzt an dieser Stelle der Servicebereich an, das heißt, das seitliche Gestellteil liegt dann im Servicebereich. Bevorzugt ist dieses seitliche Gestellteil mit einer in die Querrichtung weisenden Öffnung versehen, durch die das jeweilige Werkzeug, zumindest das Oberwerkzeug, vom Bearbeitungsbereich in den Servicebereich verfahrbar ist und/oder durch den das Servicepersonal vom Servicebereich das in der jeweiligen Serviceposition angeordnete Werkzeug erreichen kann.

Ein solches Gestell ermöglicht eine geeignete Arbeitshöhe zur Bearbeitung von diversen Flugzeugstrukturbauteilen, beispielsweise Rümpfen oder Flügeln. Die Arbeitshöhe, also die Stelle, an der das Oberwerkzeug mit dem Unterwerkzeug bestimmungsgemäß zusammenwirkt, liegt dabei insbesondere in einem Bereich von 5 m bis 7 m, bevorzugt in einem Bereich von 5,5 m bis 6,5 m, besonders bevorzugt in einem Bereich von 5,5 m bis 6 m.

Nach einer weiteren Lehre gemäß Anspruch 15, der eigenständige Bedeutung zukommt, wird ein Verfahren zur Bearbeitung eines Flugzeugstrukturbauteils mit einer vorschlagsgemäßen Bearbeitungsanlage beansprucht.

Wesentlich nach der weiteren Lehre ist, dass zu Servicezwecken, das heißt für Wartungsarbeiten, Reparaturarbeiten oder einen Werkzeugwechsel, das Oberwerkzeug und das Unterwerkzeug von einer gemeinsamen Serviceplattform zugänglich sind. Auf diese Weise werden Servicearbeiten vereinfacht und verkürzt, da für Arbeiten sowohl am Oberwerkzeug als auch am Unterwerkzeug nur noch eine einzige Serviceplattform in einer einzigen Serviceebene positioniert sein muss. Im Übrigen sei hinsichtlich des Verfahrens auf die vorangehenden Ausführungen zur Bearbeitungsanlage verwiesen.

Im Folgenden wird die Erfindung anhand einer lediglich ein Ausführungsbeispiel darstellenden Zeichnung näher erläutert. In der Zeichnung zeigt
- Fig. 1: eine vorschlagsgemäße Bearbeitungsanlage in einer Bearbeitungsstellung a) in einer perspektivischen Ansicht, b) in einer geschnittenen Ansicht und c) als Ausschnitt in einer Draufsicht,
- Fig. 2: die Bearbeitungsanlage gemäß Fig. 1 in einer Servicestellung a) in einer perspektivischen Ansicht, b) in einer geschnittenen Ansicht und c) als Ausschnitt in einer Draufsicht und
- Fig. 3: eine Detailvergrößerung der Bearbeitungsanlage gemäß Fig. 2a.

Die dargestellte Bearbeitungsanlage 1 dient der Bearbeitung von Flugzeugstrukturbauteilen 2, bei denen es sich, wie weiter oben angesprochen, um Rümpfe, Flügel oder andere große Flugzeugstrukturbauteile 2 handeln kann. Die Bearbeitungsanlage 1 weist eine Bearbeitungsstation 3 auf. Die Bearbeitungsstation 3 weist zum Einen einen Aufspannrahmen 4 zur Aufnahme des jeweils zu bearbeitenden Flugzeugstrukturbauteils 2 und zum Anderen eine Bearbeitungseinheit 5 für die Bearbeitung des Flugzeugstrukturbauteils 2 auf.

Der Aufspannrahmen 4 erstreckt sich entlang einer Stationslängsachse 6, die in eine Längsrichtung X der Bearbeitungsanlage 1 verläuft. Die Erstreckung des Aufspannrahmens 4 entlang der Stationslängsachse 6 ist weit zu verstehen. Sie bedeutet, dass der Aufspannrahmen 4 zumindest in einer Grundstellung parallel zu der Stationslängsachse 6 verläuft, beispielsweise wenn der Aufspannrahmen 4 vertikal ausgerichtet ist und/oder horizontal ausgerichtet ist.

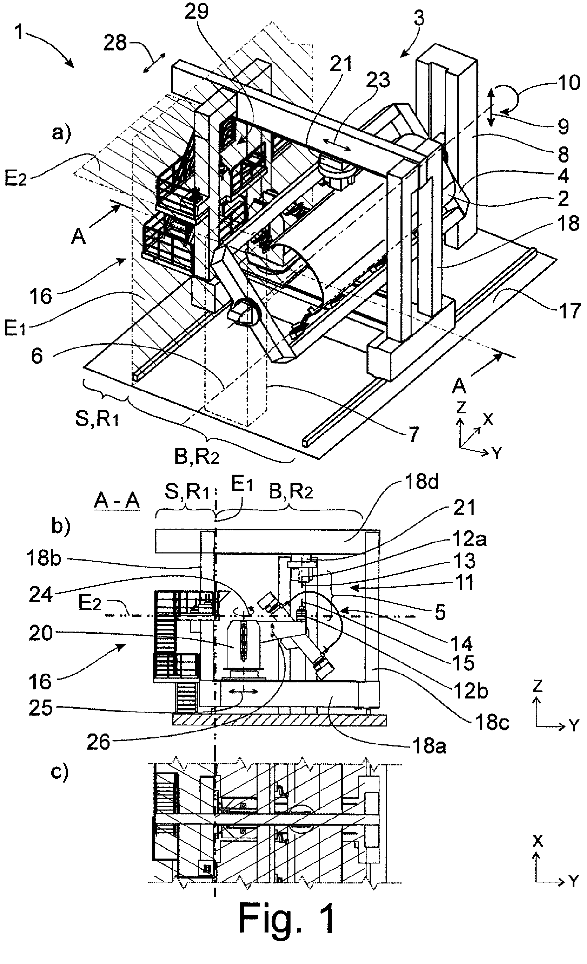

Der Aufspannrahmen 4 ist hier und vorzugsweise an zwei Positioniertürmen 7, 8, die sich parallel zur Höhenrichtung Z erstrecken, höhenverstellbar und schwenkbar angelenkt. Die Höhenverstellbarkeit ist in Fig. 1a mit dem Bezugszeichen 9 und die Schwenkbarkeit mit dem Bezugszeichen 10 angedeutet. Dabei kann die Höhenverstellbarkeit 9 für die beiden Positioniertürme 7, 8 getrennt möglich sein, so dass ein Kippen des Aufspannrahmens 4 um eine quer zur Stationslängsachse 6 verlaufende Kippachse (hier nicht dargestellt) realisierbar ist.

Die Bearbeitungseinheit 5 umfasst eine Oberwerkzeugeinheit 11 mit einem entlang einer ersten Werkzeugachse 12a ausgerichteten Oberwerkzeug 13 und eine zugeordnete Unterwerkzeugeinheit 14 mit einem entlang einer zweiten Werkzeugachse 12b ausgerichteten Unterwerkzeug 15. Die Oberwerkzeugeinheit 11 und die Unterwerkzeugeinheit 14 bilden jeweils einen Endeffektor, wobei das Oberwerkzeug 13 insbesondere ein Nietkopf oder Bohrkopf ist und das Unterwerkzeug 15 das korrespondierende Gegenstück dazu bildet. Grundsätzlich kann die Oberwerkzeugeinheit 11 auch mehr als ein Oberwerkzeug 13 aufweisen, insbesondere einen weiteren Nietkopf und/oder Bohrkopf.

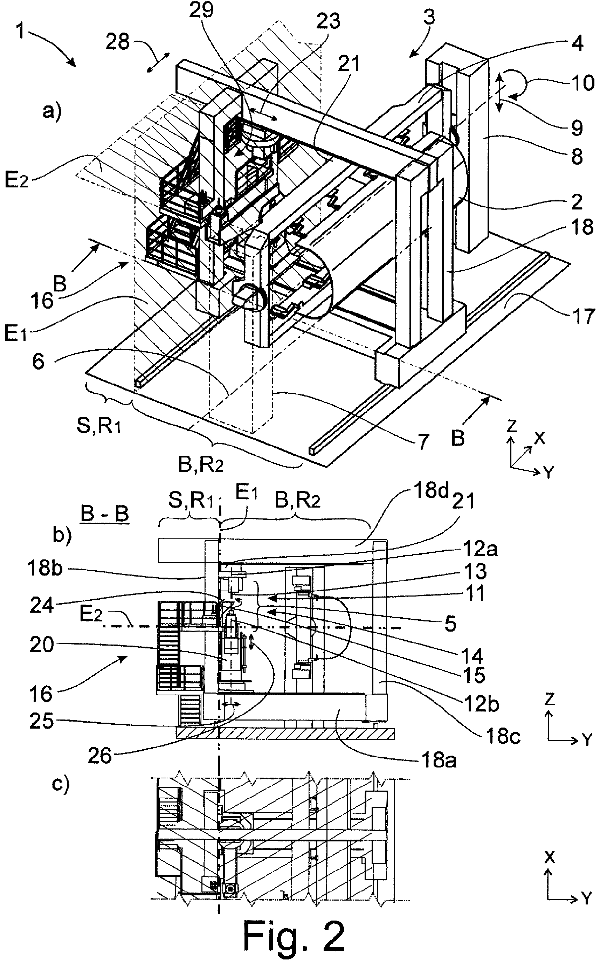

Die vorschlagsgemäße Bearbeitungsanlage 1 weist einen Bearbeitungsbereich B und einen Servicebereich S auf, die in den Fig. 1a und 1b sowie in den Fig. 2a und 2b durch geschweifte Klammern und in Fig. 1c sowie in Fig. 2c durch unterschiedliche Schraffuren angedeutet sind. Der Bearbeitungsbereich B ist ein Bereich der Bearbeitungsanlage 1, in welchem bestimmungsgemäß die Bearbeitung des Flugzeugstrukturbauteils 2 durchgeführt wird. Der Bearbeitungsbereich B wird von einem seitlich begrenzten, das heißt in die Querrichtung Y begrenzten, ersten Raumabschnitt R₁ gebildet. In diesem Raumabschnitt R₁, der sich zwischen den beiden in Längsrichtung X voneinander beabstandeten Positioniertürmen 7, 8 erstreckt, befindet sich auch der Aufspannrahmen 4. Der Servicebereich S, der der Durchführung von Wartungs- und Reparaturarbeiten sowie dem Werkzeugwechsel dient, grenzt seitlich an den Bearbeitungsbereich B an. Der Servicebereich S wird von einem zweiten Raumabschnitt R₂ gebildet, der außerhalb des Bearbeitungsbereichs B bzw. ersten Raumabschnitts R₁ liegt. "Seitlich" bedeutet hier "in der Querrichtung Y", das heißt, der erste Raumabschnitt R₁ und der zweite Raumabschnitt R₂ liegen in der Querrichtung Y nebeneinander. Hier und vorzugsweise grenzen der erste Raumabschnitt R₁ und der zweite Raumabschnitt R₂ in einer Ebene E₁, die sich in der Längsrichtung X und Höhenrichtung Z erstreckt, unmittelbar aneinander.

Wie in den Fig. 1 bis 3 zu erkennen ist, grenzt eine Serviceplattform 16, die im Servicebereich S liegt, an den Bearbeitungsbereich B seitlich an. Die Serviceplattform 16 ist in einer zur Höhenrichtung Z orthogonalen Serviceebene E₂ positioniert oder positionierbar. Die Serviceebene E₂ ist dabei eine festgelegte Ebene E₁, hat also einen definierten und unveränderlichen Abstand zum Untergrund 17 der Bearbeitungsanlage 1.

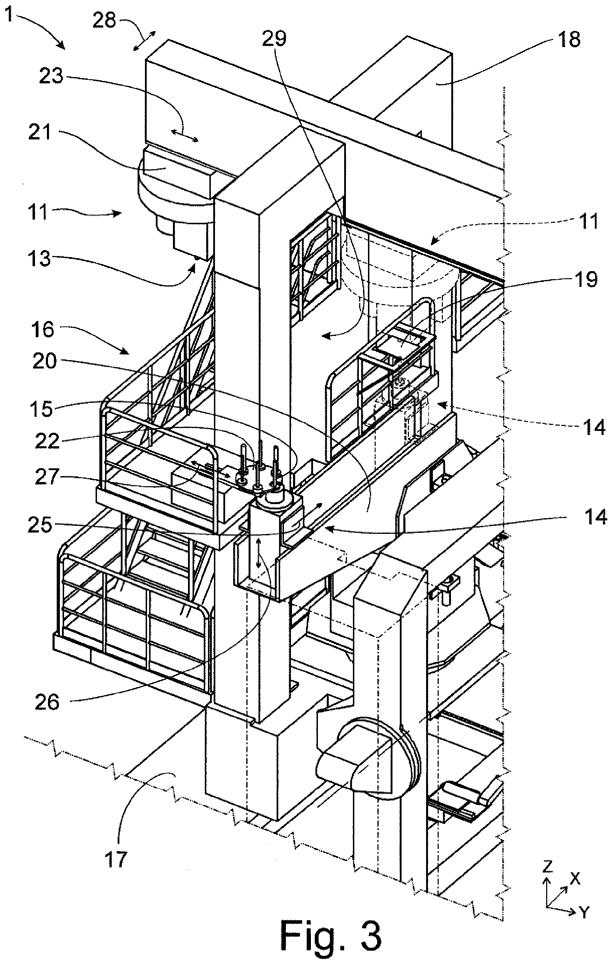

Wesentlich ist nun, dass das Oberwerkzeug 13 und das Unterwerkzeug 15 von einer beliebigen Bearbeitungsposition, in der das Oberwerkzeug 13 und das Unterwerkzeug 15 eine Bearbeitung des Flugzeugstrukturbauteils 2 ausführen (Fig. 1a-c), in eine oder mehrere Servicepositionen (Fig. 2a-c und Fig. 3) verfahrbar sind, wobei in der jeweiligen Serviceposition sowohl das Oberwerkzeug 13 als auch das Unterwerkzeug 15 von der in der Serviceebene E₂ positionierten gemeinsamen Serviceplattform 16 zugänglich sind. Mit der vorschlagsgemäßen Bearbeitungsanlage 1 wird somit ein einzelner Bereich bereitgestellt, von dem aus die Servicearbeiten sowohl am Oberwerkzeug 13 bzw. der Oberwerkzeugeinheit 11 als auch am Unterwerkzeug 15 bzw. der Unterwerkzeugeinheit 14 durchgeführt werden können. Die Notwendigkeit, weitere Serviceplattformen bereitzustellen und zu positionieren oder eine Serviceplattform an unterschiedliche Stellen zu verfahren, entfällt somit.

Wie die Fig. 1c und 2c zeigen, erstreckt sich der Bearbeitungsbereich B innerhalb des Gestells 18 der Bearbeitungsanlage 1, das hier beispielhaft portalförmig ausgestaltet ist und ein unteres Gestellteil 18a, zwei seitliche Gestellteile 18b, 18c und ein oberes Gestellteil 18d umfasst. Genau genommen erstreckt sich der Bearbeitungsbereich B von der zum Aufspannrahmen 4 weisenden Innenseite des linken seitlichen Gestellteils 18b bis zur zum Aufspannrahmen 4 weisenden Innenseite des rechten seitlichen Gestellteils 18c. In der Längsrichtung X verläuft der Bearbeitungsbereich B zwischen den Positioniersäulen 7, 8. Der Servicebereich S verläuft bezogen auf die Längsrichtung X parallel zum Bearbeitungsbereich und hat hier in Längsrichtung X dieselbe Erstreckung. In der Querrichtung Y erstreckt sich der Servicebereich S von der zum Aufspannrahmen 4 weisenden Innenseite des seitlichen Gestellteils 18b bis zur vom Aufspannrahmen 4 wegweisenden Seite der Serviceplattform 16. In der Höhenrichtung Z erstrecken sich der Bearbeitungsbereich B und der Servicebereich S zwischen einer Ebene (hier nicht dargestellt), durch die sich die zum Aufspannrahmen 4 gewandte Oberseite des unteren Gestellteils 18a erstreckt, und einer Ebene (hier nicht dargestellt), durch die sich die zum Aufspannrahmen 4 gewandte Unterseite des oberen Gestellteils 18d erstreckt.

Das Oberwerkzeug 13 und/oder das Unterwerkzeug 15 können nun in eine oder mehrere Servicepositionen verfahren werden, von denen einige in den Fig. 2a-c und 3 dargestellt sind. So kann beispielsweise das Oberwerkzeug 13 mittels eines zugeordneten verfahrbaren Oberwerkzeugträgers 21 in eine Serviceposition verfahren werden (mit dem Bezugszeichen 23 angedeutet), die in der Höhenrichtung Z über der Serviceplattform 16 liegt (in den Fig. 2a-c und in Fig. 3 mit durchgezogener Linie dargestellt). Diese Serviceposition liegt innerhalb des Servicebereichs S. Hier können beispielsweise Wartungs- und Reparaturarbeiten vom Servicepersonal durchgeführt werden.

Das Oberwerkzeug 13 kann auch in eine alternative Serviceposition verfahren werden (ebenfalls mit dem Bezugszeichen 23 angedeutet), die in der Querrichtung Y benachbart zum Servicebereich S und zur Serviceplattform 16 angeordnet ist und in der das Oberwerkzeug 13 in einer Ebene (nicht dargestellt) liegt, die von der Serviceebene E₂ in der Höhenrichtung Z beabstandet ist. Der Abstand zwischen dem Oberwerkzeug 13 und der Serviceebene E₂ liegt, insbesondere für alle zuvor beschriebenen Servicepositionen des Oberwerkzeugs 13, in einem Bereich von 0,5 m bis 2,0 m, bevorzugt in einem Bereich von 1,0 m bis 1,8 m, besonders bevorzugt in einem Bereich von 1,2 m bis 1,6 m. In dieser Serviceposition (in Fig. 3 gestrichelt dargestellt) kann die Funktion des Oberwerkzeugs 13 an einem Prüfabschnitthalter 19, der im Weiteren noch näher beschrieben wird, überprüft werden.

Das Unterwerkzeug 15 kann hier und vorzugsweise in verschiedene Servicepositionen gebracht werden, die in der Querrichtung Y benachbart zum Servicebereich S bzw. zur Serviceplattform 16 angeordnet sind. Grundsätzlich ist aber auch vorstellbar, mindestens eine Serviceposition des Unterwerkzeugs 15 innerhalb des Servicebereichs S vorzusehen (hier nicht dargestellt). Das Unterwerkzeug 15 in hier insbesondere auf einem Unterwerkzeugträger 20 linear verfahrbar, insbesondere zwischen einer ersten Serviceposition (in den Fig. 2a-c und in Fig. 3 mit durchgezogener Linie dargestellt) und einer zweiten Serviceposition (in Fig. 3 gestrichelt dargestellt).

In der ersten Serviceposition wirkt das Unterwerkzeug 15 hier und vorzugsweise mit einem automatischen Werkzeugwechsler 22 zusammen, was im Weiteren noch näher beschrieben wird.

Das Unterwerkzeug kann alternativ auch in eine Serviceposition in der Höhenrichtung Z unter dem Prüfabschnitthalter 19 verfahren werden, um die Funktion des Unterwerkzeugs 15 zu überprüfen. Bei der in den Fig. 2a-c und in Fig. 3 dargestellten Ausrichtung des Unterwerkzeugträgers 20 kann das Unterwerkzeug 15, hier in Längsrichtung X, entlang des Servicebereichs S bzw. der Serviceplattform 16 verfahren werden. Da der Unterwerkzeugträger 20 hier und vorzugsweise zum Servicebereich S bzw. zur Serviceplattform 16 drehbar und/oder linear verfahrbar ist, ist es aber auch denkbar, das Unterwerkzeug 15 am Unterwerkzeugträger 20 winkelig zur Längsrichtung X und insbesondere in der Querrichtung Y zu verfahren, um das Unterwerkzeug 15 in einer seiner Servicepositionen anzuordnen. Im Einzelnen ist der Unterwerkzeugträger 20 hier und vorzugsweise um eine parallel zur Höhenrichtung Z verlaufende Drehachse drehbar (mit dem Bezugszeichen 24 angedeutet) und/oder in der Querrichtung Y linear verfahrbar (mit dem Bezugszeichen 25 angedeutet) und/oder in der Höhenrichtung Z verstellbar (mit dem Bezugszeichen 26 angedeutet).

Wie bereits erwähnt und im Detail in Fig. 3 dargestellt, weist die vorschlagsgemäße Bearbeitungsanlage 1 hier und vorzugsweise einen automatischen Werkzeugwechsler 22 auf. In der in Fig. 3 mit durchgezogener Linie dargestellten Bearbeitungsposition des Unterwerkzeugs 15 befindet sich das Unterwerkzeug 15 innerhalb der Reichweite des automatischen Werkzeugwechslers 22. Mit anderen Worten ist das Unterwerkzeug 15 hier von dem automatischen Werkzeugwechsler 22 aus dem Servicebereich S heraus zugänglich. Um einen Werkzeugwechsel vorzunehmen, kann der automatische Werkzeugwechsler 22 aus einer Parkposition im Servicebereich S, die insbesondere in der Höhenrichtung Z über der Serviceplattform 16 liegt, in der Querrichtung Y in eine Wechselposition benachbart zum Servicebereich S und insbesondere in der Höhenrichtung Z über dem Unterwerkzeugträger 20 verfahren werden (in Fig. 3 mit dem Bezugszeichen 27 angedeutet). Nach erfolgtem Werkzeugwechsel kann der automatische Werkzeugwechsler 22 von der Wechselposition wieder zurück in die Parkposition verfahren werden (in Fig. 3 ebenfalls mit dem Bezugszeichen 27 angedeutet).

Anschließend kann das Unterwerkzeug 15 auf dem Unterwerkzeugträger 20 in die in Fig. 3 gestrichelt dargestellte Serviceposition verfahren werden, in der besagter Prüfabschnitthalter 19 angeordnet ist. Um einen Funktionstest am Oberwerkzeug 13 und/oder Unterwerkzeug 15 durchzuführen, wird das Oberwerkzeug 13 in der Höhenrichtung Z über dem Prüfabschnitthalter 19 und das Unterwerkzeug 15 darunter angeordnet und bestimmungsgemäß betätigt. Der Prüfabschnitthalter 19 ist hier und vorzugsweise in der Querrichtung Y benachbart zum Servicebereich S angeordnet, kann aber grundsätzlich auch im Servicebereich S angeordnet sein. Insbesondere ist der Prüfabschnitthalter 19 in der Höhenrichtung Z in einer Ebene über der Serviceebene E₂ angeordnet.

Wie bereits erläutert, weist die vorschlagsgemäße Bearbeitungsanlage 1 ein hier und vorzugsweise portalförmiges Gestell 18 auf, welches einzelne Komponenten, insbesondere die Oberwerkzeugeinheit 11 und Unterwerkzeugeinheit 14, hier die Serviceplattform 16, trägt. Das Gestell 18 ist selbst relativ zu dem Untergrund 17 verfahrbar, hier und vorzugsweise in der Längsrichtung X bzw. entlang der Stationslängsachse 6. Die Serviceplattform 16 wird dabei immer mitbewegt. Diese ist hier fest mit dem Gestell 18, insbesondere dem linken seitlichen Gestellteil 18b, verbunden.

Das seitliche Gestellteil 18b, das hier vollständig innerhalb des Servicebereichs S angeordnet ist, weist eine Öffnung 29 auf, durch die, wie in Fig. 3 zu erkennen ist, die Oberwerkzeugeinheit 11 bzw. das Oberwerkzeug 13 von dem Bearbeitungsbereich B in den Servicebereich S verfahren werden kann. Durch diese Öffnung 29 sind das Oberwerkzeug 13 und das Unterwerkzeug 15 auch für das Servicepersonal zugänglich, wenn sich das Oberwerkzeug 13 und das Unterwerkzeug 15 in der in Fig. 3 gestrichelt dargestellten Position im Bereich des Prüfabschnitthalters 19 befinden.

Die einzelnen Drehbewegungen und Linearbewegungen der oben genannten Komponenten der Bearbeitungsanlage 1 können über Antriebsmotoren, insbesondere über voneinander unabhängige Antriebsmotoren, bewirkt werden (nicht dargestellt). So kann die vorschlagsgemäße Bearbeitungsanlage 1 einen oder mehrere der folgenden Antriebsmotoren aufweisen:
- einen Antriebsmotor für die Drehbewegung des Unterwerkzeugträgers 20, insbesondere relativ zum unteren Gestellteil 18a,
- einen Antriebsmotor für die Linearbewegung des Unterwerkzeugträgers 20, insbesondere relativ zum unteren Gestellteil 18a,
- einen Antriebsmotor für die Linearbewegung des Unterwerkzeugs 15, insbesondere relativ zum Unterwerkzeugträger 20,
- einen Antriebsmotor für die Verstellbarkeit des Unterwerkzeugträgers 20 in der Höhenrichtung Z, insbesondere relativ zum Gestell 18,
- einen Antriebsmotor für die Linearbewegung des Oberwerkzeugträgers 21, insbesondere relativ zum oberen Gestellteil 18d,
- einen Antriebsmotor für die Linearbewegung des unteren Gestellteils 18a bzw. des Gestells 18, insbesondere relativ zum Untergrund 17,
- einen Antriebsmotor für die Linearbewegung des automatischen Werkzeugwechslers 22, insbesondere relativ zum Gestell 18.

Es sei darauf hingewiesen, dass die Serviceplattform 16 hier und vorzugsweise am Gestell 18, insbesondere dem linken Gestellteil 18b, in der Längsrichtung X, der Querrichtung Y und der Höhenrichtung Z dauerhaft fixiert, also nicht verfahrbar, ist. Grundsätzlich ist es aber auch denkbar, die Serviceplattform 16 in einer oder mehreren der Richtungen X, Y, Z verfahrbar auszugestalten. Die zuvor beschriebenen Servicearbeiten sind aber nur dann sowohl am Oberwerkzeug 13 als auch am Unterwerkzeug 15 von der Serviceplattform 16 aus durchführbar, wenn sich diese in der Serviceebene E₂ befindet.

Nach einer weiteren Lehre, der ebenfalls eigenständige Bedeutung zukommt, wird ein Verfahren zur Bearbeitung eines Flugzeugstrukturbauteils 2 mit einer vorschlagsgemäßen Bearbeitungsanlage 1 beansprucht.

Wesentlich bei dem vorschlagsgemäßen Verfahren ist, dass zu Servicezwecken, also für eine Wartung, Reparatur oder einen Werkzeugwechsel, das Oberwerkzeug 13 und das Unterwerkzeug 15 jeweils in eine oder mehrere Servicepositionen verfahren werden können, in denen sowohl das Oberwerkzeug 13 als auch das Unterwerkzeug 15 von der Serviceplattform 16 für das Servicepersonal und/oder eine Serviceeinrichtung wie einen automatischen Werkzeugwechsler 22 zugänglich sind. Servicearbeiten können auf diese Weise erheblich vereinfacht und verkürzt werden.

## Patentansprüche

1. Bearbeitungsanlage für Flugzeugstrukturbauteile (2) mit einer Bearbeitungsstation (3) umfassend einen Aufspannrahmen (4) zur Aufnahme des jeweils zu bearbeitenden Flugzeugstrukturbauteils (2), wobei sich der Aufspannrahmen (4) entlang einer in eine Längsrichtung (X) verlaufenden Stationslängsachse (6) erstreckt, und eine Bearbeitungseinheit (5) für die Bearbeitung des Flugzeugstrukturbauteils (2), die eine Oberwerkzeugeinheit (11) mit einem entlang einer ersten Werkzeugachse (12a) ausgerichteten Oberwerkzeug (13) und eine Unterwerkzeugeinheit (14) mit einem entlang einer zweiten Werkzeugachse (12b) ausgerichteten Unterwerkzeug (15) aufweist, wobei die erste Werkzeugachse (12a) und die zweite Werkzeugachse (12b) parallel zu einer zur Längsrichtung (X) winkeligen, insbesondere orthogonalen, Höhenrichtung (Z) verlaufen, wobei die Bearbeitungsanlage (1) einen Bearbeitungsbereich (B) für die Bearbeitung des Flugzeugstrukturbauteils (2) aufweist, der von einem seitlich begrenzten, ersten Raumabschnitt (R₁) gebildet wird, in dem der Aufspannrahmen (4) und die Bearbeitungseinheit (5) während der Bearbeitung angeordnet sind, wobei die Bearbeitungsanlage (1) einen Servicebereich (S) für die Durchführung von Servicearbeiten aufweist, der von einem seitlich begrenzten, zweiten Raumabschnitt (R₂) gebildet wird, wobei der erste Raumabschnitt (R₁) vom zweiten Raumabschnitt (R₂) in einer zur Längsrichtung (X) und Höhenrichtung (Z) orthogonalen Querrichtung (Y) getrennt ist, wobei im Servicebereich (S) eine Serviceplattform (16) angeordnet ist, die in einer zur Höhenrichtung (Z) orthogonalen Serviceebene (E₂) positioniert oder positionierbar ist,
wobei die Bearbeitungsanlage (1) ein Gestell (18) aufweist, welches einzelne Komponenten und die Serviceplattform (16) trägt, wobei das Gestell (18) selbst relativ zu dem Untergrund (17) verfahrbar ist,
**dadurch gekennzeichnet,**
**dass** das Oberwerkzeug (13) und das Unterwerkzeug (15) jeweils in mindestens eine Serviceposition verfahrbar sind, wobei in den Servicepositionen beide Werkzeuge (13, 15) von der in der Serviceebene (E₂) positionierten gemeinsamen Serviceplattform (16) zugänglich sind.

2. Bearbeitungsanlage nach Anspruch 1, **dadurch gekennzeichnet, dass** das Oberwerkzeug (13) und/oder das Unterwerkzeug (15) in der Serviceposition oder in mindestens einer der Servicepositionen im Bearbeitungsbereich (B), insbesondere in einer an den Servicebereich (S) angrenzenden Position, und/oder im Servicebereich (S) positioniert ist/sind.

3. Bearbeitungsanlage nach Anspruch 1 oder 2, **dadurch gekennzeichnet, dass** das Oberwerkzeug (13) in der Serviceposition oder in mindestens einer der Servicepositionen im Servicebereich (S), insbesondere in Höhenrichtung (Z) über der Serviceplattform (16), und/oder in der Querrichtung (Y) benachbart zum Servicebereich (S) und/oder zur Serviceplattform (16), insbesondere in einer zur Höhenrichtung (Z) orthogonalen und von der Serviceplattform (16) beabstandeten Ebene, positioniert ist.

4. Bearbeitungsanlage nach Anspruch 3, **dadurch gekennzeichnet, dass** der Abstand zwischen dem Oberwerkzeug (13) und der Serviceebene (E₂) in einem Bereich von 0,5 m bis 2,0 m, bevorzugt in einem Bereich von 1,0 m bis 1,8 m, besonders bevorzugt in einem Bereich von 1,2 m bis 1,6 m, liegt.

5. Bearbeitungsanlage nach einem der vorhergehenden Ansprüche, **dadurch gekennzeichnet, dass** das Unterwerkzeug (15) in der Serviceposition oder in mindestens einer der Servicepositionen in der Querrichtung (Y) benachbart zum Servicebereich (S) und/oder zur Serviceplattform (16) und/oder im Servicebereich (S), insbesondere in Höhenrichtung (Z) über der Serviceplattform (16), positioniert ist.

6. Bearbeitungsanlage nach einem der vorhergehenden Ansprüche, **dadurch gekennzeichnet, dass** das Unterwerkzeug (15), insbesondere an einem Unterwerkzeugträger (20), zwischen verschiedenen Servicepositionen entlang des Servicebereichs (S) und/oder entlang der Serviceplattform (16), insbesondere in der Längsrichtung (X), verfahrbar ist, vorzugsweise, dass der Unterwerkzeugträger (20) relativ zum Servicebereich (S), insbesondere zur Serviceplattform (16), drehbar und/oder linear verfahrbar ist.

7. Bearbeitungsanlage nach einem der vorhergehenden Ansprüche, **dadurch gekennzeichnet, dass** das Unterwerkzeug (15) in der Serviceposition oder in mindestens einer der Servicepositionen in der Querrichtung (Y) benachbart zu einem automatischen Werkzeugwechsler (22) positioniert ist, vorzugsweise, dass der automatische Werkzeugwechsler (22) in einer Parkposition des automatischen Werkzeugwechslers (22) im Servicebereich (S), insbesondere in Höhenrichtung (Z) über der Serviceplattform (16), positioniert ist und/oder in einer Wechselposition des automatischen Werkzeugwechslers (22) in der Querrichtung (Y) benachbart zum Servicebereich (S) und/oder in Höhenrichtung (Z) über dem Unterwerkzeugträger (20) positioniert ist.

8. Bearbeitungsanlage nach einem der vorhergehenden Ansprüche, **dadurch gekennzeichnet, dass** das Oberwerkzeug (13) in der Serviceposition oder in mindestens einer der Servicepositionen in der Höhenrichtung (Z) über einem Prüfabschnitthalter (19) positioniert ist.

9. Bearbeitungsanlage nach einem der vorhergehenden Ansprüche, **dadurch gekennzeichnet, dass** das Unterwerkzeug (15) in der Serviceposition oder in mindestens einer der Servicepositionen in der Höhenrichtung (Z) unter einem Prüfabschnitthalter (19) positioniert ist.

10. Bearbeitungsanlage nach Anspruch 8 oder 9, **dadurch gekennzeichnet, dass** der Prüfabschnitthalter (19) in der Querrichtung (Y) benachbart zum Servicebereich (S) und/oder zur Serviceplattform (16) positioniert ist.

11. Bearbeitungsanlage nach einem der vorhergehenden Ansprüche, **dadurch gekennzeichnet, dass** die Bearbeitungsanlage (1) ein Gestell (18) aufweist, an dem das Oberwerkzeug (13), insbesondere über einen Oberwerkzeugträger (21), und vorzugsweise das Unterwerkzeug (15), insbesondere über den Unterwerkzeugträger (20), gelagert ist, vorzugsweise, dass das Oberwerkzeug (13) und/oder das Unterwerkzeug (15) jeweils relativ zu dem Gestell (18) zwischen mindestens einer Bearbeitungsposition und mindestens einer Serviceposition verfahrbar ist.

12. Bearbeitungsanlage nach Anspruch 11, **dadurch gekennzeichnet, dass** das Gestell (18) mindestens ein seitliches Gestellteil (18b, 18c), insbesondere zwei voneinander in der Querrichtung (Y) beabstandete seitliche Gestellteile (18b, 18c), aufweist, wobei der den Bearbeitungsbereich (B) bildende erste Raumabschnitt (R₁) von dem mindestens einen seitlichen Gestellteil (18b, 18c) seitlich begrenzt wird, vorzugsweise, dass das mindestens eine seitliche Gestellteil (18b, 18c) mit einem oberen Gestellteil (18d) für die Lagerung des Oberwerkzeugs (13), insbesondere Oberwerkzeugträgers (21), und/oder einem unteren Gestellteil (18a) für die Lagerung des Unterwerkzeugs (15), insbesondere Unterwerkzeugträgers (20), verbunden ist, weiter vorzugsweise, dass das untere Gestellteil (18a), das mindestens eine seitliche Gestellteil (18b, 18c) und das obere Gestellteil (18d) zusammen eine C-Form oder Portalform bilden.

13. Bearbeitungsanlage nach Anspruch 11 oder 12, **dadurch gekennzeichnet, dass** die Serviceplattform (16) an oder angrenzend zu dem seitlichen Gestellteil (18b) oder einem der seitlichen Gestellteile (18b, 18c) angeordnet ist, wobei das Oberwerkzeug (13) und/oder das Unterwerkzeug (15) am seitlichen Gestellteil (18b) vorbei oder durch eine in Querrichtung (Y) weisende Öffnung (29) im seitlichen Gestellteil (18b) in der jeweiligen Serviceposition von der Serviceplattform (16) zugänglich ist/sind oder zwischen dem Bearbeitungsbereich (B) und dem Servicebereich (S) verfahrbar ist/sind.

14. Bearbeitungsanlage nach einem der Ansprüche 11 bis 13, **dadurch gekennzeichnet, dass** die Serviceplattform (16) am Gestell (18), insbesondere am seitlichen Gestellteil (18b), in der Längsrichtung (X) und/oder Querrichtung (Y) und/oder Höhenrichtung (Z) dauerhaft fixiert ist.

15. Verfahren zur Bearbeitung eines Flugzeugstrukturbauteils (2) mit einer Bearbeitungsanlage (1) nach einem der vorhergehenden Ansprüche,
**dadurch gekennzeichnet,**
**dass** zu Servicezwecken das Oberwerkzeug (13) und das Unterwerkzeug (15) jeweils in die Serviceposition oder in mindestens eine Serviceposition verfahren werden, derart, dass das Oberwerkzeug (13) und das Unterwerkzeug (15) von der gemeinsamen Serviceplattform (16) zugänglich sind.

## Claims

1. Processing installation for aircraft structural components (2) having a processing station (3) comprising a clamping frame (4) for receiving the aircraft structural component (2) which is intended to be processed in each case, wherein the clamping frame (4) extends along a station longitudinal axis (6) which extends in a longitudinal direction (X) and a processing unit (5) for processing the aircraft structural component (2) which has an upper tool unit (11) having an upper tool (13) which is orientated along a first tool axis (12a) and a lower tool unit (14) having a lower tool (15) which is orientated along a second tool axis (12b), wherein the first tool axis (12a) and the second tool axis (12b) extend parallel with a vertical direction (Z) which is angled relative to the longitudinal direction (X), in particular orthogonal, wherein the processing installation (1) has a processing region (B) for processing the aircraft structural component (2) which is formed by a laterally delimited, first spatial portion (R₁) in which the clamping frame (4) and the processing unit (5) are arranged during processing, wherein the processing installation (1) has a service region (S) for carrying out service operations, which is formed by a laterally delimited, second spatial portion (R₂), wherein the first spatial portion (R₁) is separated from the second spatial portion (R₂) in a transverse direction (Y) which is orthogonal to the longitudinal direction (X) and vertical direction (Z), wherein a service platform (16) is arranged in the service region (S) and is or can be positioned in a service plane (E₂) which is orthogonal to the vertical direction (Z),
wherein the processing installation (1) has a frame (18) which carries individual components and the service platform (16), wherein the frame (18) is itself displaceable relative to the substrate (17),
**characterized**
**in that** the upper tool (13) and the lower tool (15) are each displaceable into at least one service position, wherein both tools (13, 15) are accessible from the common service platform (16) which is positioned in the service plane (E₂) in the service positions.

2. Processing installation according to Claim 1, **characterized in that** the upper tool (13) and/or the lower tool (15) is/are positioned in the service position or in at least one of the service positions in the processing region (B), in particular in a position adjacent to the service region (S), and/or in the service region (S).

3. Processing installation according to Claim 1 or Claim 2, **characterized in that** the upper tool (13) in the service position or in at least one of the service positions in the service region (S), in particular in a vertical direction (Z) above the service platform (16), and/or in the transverse direction (Y) is positioned adjacent to the service region (S) and/or the service platform (16), in particular in a plane which is orthogonal to the vertical direction (Z) and which is spaced apart from the service platform (16).

4. Processing installation according to Claim 3, **characterized in that** the spacing between the upper tool (13) and the service plane (E₂) is in a range from 0.5 m to 2.0 m, preferably in a range from 1.0 m to 1.8 m, particularly preferably in a range from 1.2 m to 1.6 m.

5. Processing installation according to one of the preceding claims, **characterized in that** the lower tool (15) in the service position or in at least one of the service positions in the transverse direction (Y) is positioned adjacent to the service region (S) and/or the service platform (16) and/or in the service region (S), in particular in the vertical direction (Z) above the service platform (16).

6. Processing installation according to one of the preceding claims, **characterized in that** the lower tool (15), in particular on a lower tool carrier (20), is displaceable between different service positions along the service region (S) and/or along the service platform (16), in particular in the longitudinal direction (X), preferably **in that** the lower tool carrier (20) is rotatable and/or linearly displaceable relative to the service region (S), in particular the service platform (16) .

7. Processing installation according to one of the preceding claims, **characterized in that** the lower tool (15) in the service position or in at least one of the service positions in the transverse direction (Y) is positioned adjacent to an automatic tool changer (22), preferably **in that** the automatic tool changer (22) is positioned in a park position of the automatic tool changer (22) in the service region (S), in particular in a vertical direction (Z) above the service platform (16), and/or is positioned in a change position of the automatic tool changer (22) in the transverse direction (Y) adjacent to the service region (S) and/or in a vertical direction (Z) above the lower tool carrier (20).

8. Processing installation according to one of the preceding claims, **characterized in that** the upper tool (13) in the service position or in at least one of the service positions in the vertical direction (Z) is positioned above a test portion holder (19).

9. Processing installation according to one of the preceding claims, **characterized in that** the lower tool (15) in the service position or in at least one of the service positions in the vertical direction (Z) is positioned below a test portion holder (19).

10. Processing installation according to Claim 8 or Claim 9, **characterized in that** the test portion holder (19) in the transverse direction (Y) is positioned adjacent to the service region (S) and/or the service platform (16).

11. Processing installation according to one of the preceding claims, **characterized in that** the processing installation (1) has a frame (18), on which the upper tool (13), in particular via an upper tool carrier (21), and preferably the lower tool (15), in particular via the lower tool carrier (20), is supported, preferably **in that** the upper tool (13) and/or the lower tool (15) can each be displaced relative to the frame (18) between at least one processing position and at least one service position.

12. Processing installation according to Claim 11, **characterized in that** the frame (18) has at least one lateral frame portion (18b, 18c), in particular two lateral frame portions (18b, 18c) which are spaced apart from each other in the transverse direction (Y), wherein the first spatial portion (R₁) which forms the processing region (B) is laterally delimited by the at least one lateral frame portion (18b, 18c), preferably **in that** the at least one lateral frame portion (18b, 18c) is connected to an upper frame portion (18d) for supporting the upper tool (13), in particular upper tool carrier (21), and/or a lower frame portion (18a) for supporting the lower tool (15), in particular lower tool carrier (20), more preferably **in that** the lower frame portion (18a), the at least one lateral frame portion (18b, 18c) and the upper frame portion (18d) together form a C-shape or portal-like shape.

13. Processing installation according to Claim 11 or Claim 12, **characterized in that** the service platform (16) is arranged at or adjacent to the lateral frame portion (18b) or one of the lateral frame portions (18b, 18c), wherein the upper tool (13) and/or the lower tool (15) is/are accessible past the lateral frame portion (18b) or through an opening (29) which is directed in a traverse direction (Y) in the lateral frame portion (18b) in the respective service position from the service platform (16), or is/are displaceable between the processing region (B) and the service region (S).

14. Processing installation according to one of Claims 11 to 13, **characterized in that** the service platform (16) is permanently fixed on the frame (18), in particular on the lateral frame portion (18b), in the longitudinal direction (X) and/or transverse direction (Y) and/or vertical direction (Z).

15. Method for processing an aircraft structural component (2) having a processing installation (1) according to one of the preceding claims,
**characterized**
**in that** for service purposes the upper tool (13) and the lower tool (15) are each displaced into the service position or into at least one service position in such a manner that the upper tool (13) and the lower tool (15) are accessible from the common service platform (16) .

## Revendications

1. Installation d'usinage pour composants structurels d'avion (2), avec un poste d'usinage (3) comprenant un cadre de serrage (4) pour recevoir le composant structurel d'avion (2) à usiner respectif, le cadre de serrage (4) s'étendant le long d'un axe longitudinal de poste (6) s'étendant dans une direction longitudinale (X), et une unité d'usinage (5) pour l'usinage du composant structurel d'avion (2), qui présente une unité d'outil supérieur (11) avec un outil supérieur (13) orienté le long d'un premier axe d'outil (12a) et une unité d'outil inférieur (14) avec un outil inférieur (15) orienté le long d'un deuxième axe d'outil (12b), le premier axe d'outil (12a) et le deuxième axe d'outil (12b) s'étendant parallèlement à une direction verticale (Z) à un angle par rapport à, notamment orthogonale à la direction longitudinale (X), l'installation d'usinage (1) présentant une zone d'usinage (B) pour l'usinage du composant structurel d'avion (2), qui est formée par une première section d'espace (R₁) délimitée latéralement, dans laquelle le cadre de serrage (4) et l'unité d'usinage (5) sont agencés pendant l'usinage, l'installation d'usinage (1) présentant une zone de service (S) pour la réalisation de travaux de service, qui est formée par une deuxième section d'espace (R₂) délimitée latéralement, la première section d'espace (R₁) étant séparée de la deuxième section d'espace (R₂) dans une direction transversale (Y) orthogonale à la direction longitudinale (X) et à la direction verticale (Z), une plate-forme de service (16) étant agencée dans la zone de service (S), laquelle est positionnée ou peut être positionnée dans un plan de service (E₂) orthogonal à la direction verticale (Z),
l'installation d'usinage (1) présentant un bâti (18) qui supporte des composants individuels et la plate-forme de service (16), le bâti (18) étant lui-même déplaçable par rapport au substrat (17),
**caractérisé en ce que**
l'outil supérieur (13) et l'outil inférieur (15) peuvent être déplacés chacun dans au moins une position de service, les deux outils (13, 15) étant accessibles dans les positions de service depuis la plate-forme de service commune (16) positionnée dans le plan de service (E₂).

2. Installation d'usinage selon la revendication 1, **caractérisée en ce que** l'outil supérieur (13) et/ou l'outil inférieur (15) est/sont positionnés dans la position de service ou dans au moins l'une des positions de service dans la zone d'usinage (B), notamment dans une position adjacente à la zone de service (S), et/ou dans la zone de service (S).

3. Installation d'usinage selon la revendication 1 ou 2, **caractérisée en ce que** l'outil supérieur (13) est positionné dans la position de service ou dans au moins l'une des positions de service dans la zone de service (S), notamment dans la direction verticale (Z) au-dessus de la plate-forme de service (16), et/ou dans la direction transversale (Y) au voisinage de la zone de service (S) et/ou de la plate-forme de service (16), notamment dans un plan orthogonal à la direction verticale (Z) et espacé de la plate-forme de service (16) .

4. Installation d'usinage selon la revendication 3, **caractérisée en ce que** la distance entre l'outil supérieur (13) et le plan de service (E₂) se situe dans une plage allant de 0,5 m à 2,0 m, de préférence dans une plage allant de 1,0 m à 1,8 m, de manière particulièrement préférée dans une plage allant de 1,2 m à 1,6 m.

5. Installation d'usinage selon l'une quelconque des revendications précédentes, **caractérisée en ce que** l'outil inférieur (15) est positionné dans la position de service ou dans au moins l'une des positions de service dans la direction transversale (Y) au voisinage de la zone de service (S) et/ou de la plate-forme de service (16) et/ou dans la zone de service (S), notamment dans la direction verticale (Z) au-dessus de la plate-forme de service (16).

6. Installation d'usinage selon l'une quelconque des revendications précédentes, **caractérisée en ce que** l'outil inférieur (15), notamment sur un support d'outil inférieur (20), peut être déplacé entre différentes positions de service le long de la zone de service (S) et/ou le long de la plate-forme de service (16), notamment dans la direction longitudinale (X), de préférence **en ce que** le support d'outil inférieur (20) peut être déplacé de manière rotative et/ou linéaire par rapport à la zone de service (S), notamment par rapport à la plate-forme de service (16).

7. Installation d'usinage selon l'une quelconque des revendications précédentes, **caractérisée en ce que** l'outil inférieur (15) est positionné dans la position de service ou dans au moins l'une des positions de service dans la direction transversale (Y) au voisinage d'un changeur d'outil automatique (22), de préférence **en ce que** le changeur d'outil automatique (22) est positionné dans une position de stationnement du changeur d'outil automatique (22) dans la zone de service (S), notamment dans la direction verticale (Z) au-dessus de la plate-forme de service (16), et/ou dans une position de changement du changeur d'outil automatique (22) dans la direction transversale (Y) au voisinage de la zone de service (S) et/ou dans la direction verticale (Z) au-dessus du support d'outil inférieur (20).

8. Installation d'usinage selon l'une quelconque des revendications précédentes, **caractérisée en ce que** l'outil supérieur (13) est positionné dans la position de service ou dans au moins l'une des positions de service dans la direction verticale (Z) au-dessus d'un soutien de section de contrôle (19).

9. Installation d'usinage selon l'une quelconque des revendications précédentes, **caractérisée en ce que** l'outil inférieur (15) est positionné dans la position de service ou dans au moins l'une des positions de service dans la direction verticale (Z) en dessous d'un soutien de section de contrôle (19).

10. Installation d'usinage selon la revendication 8 ou 9, **caractérisée en ce que** le soutien de section de contrôle (19) est positionné dans la direction transversale (Y) au voisinage de la zone de service (S) et/ou de la plate-forme de service (16).

11. Installation d'usinage selon l'une quelconque des revendications précédentes, **caractérisée en ce que** l'installation d'usinage (1) présente un bâti (18) sur lequel l'outil supérieur (13) est monté, notamment au-dessus d'un support d'outil supérieur (21), et de préférence l'outil inférieur (15), notamment au-dessus du support d'outil inférieur (20), de préférence **en ce que** l'outil supérieur (13) et/ou l'outil inférieur (15) sont chacun déplaçables par rapport au bâti (18) entre au moins une position d'usinage et au moins une position de service.

12. Installation d'usinage selon la revendication 11, **caractérisée en ce que** le bâti (18) présente au moins une partie de bâti latérale (18b, 18c), notamment deux parties de bâti latérales (18b, 18c) espacées l'une de l'autre dans la direction transversale (Y), la première section d'espace (R₁) formant la zone d'usinage (B) étant délimitée latéralement par l'au moins une partie de bâti latérale (18b, 18c), de préférence **en ce que** l'au moins une partie de bâti latérale (18b, 18c) est reliée à une partie de bâti supérieure (18d) pour le montage de l'outil supérieur (13), notamment du support d'outil supérieur (21), et/ou à une partie de bâti inférieure (18a) pour le montage de l'outil inférieur (15), notamment du support d'outil inférieur (20), de préférence encore **en ce que** la partie de bâti inférieure (18a), l'au moins une partie de bâti latérale (18b, 18c) et la partie de bâti supérieure (18d) forment ensemble une forme en C ou une forme de portail.

13. Installation d'usinage selon la revendication 11 ou 12, **caractérisée en ce que** la plate-forme de service (16) est agencée sur ou de manière adjacente à la partie de bâti latérale (18b) ou à l'une des parties de bâti latérales (18b, 18c), l'outil supérieur (13) et/ou l'outil inférieur (15) étant accessible(s) par la plate-forme de service (16) en passant par la partie de bâti latérale (18b) ou par une ouverture (29) dans la partie de bâti latérale (18b) orientée dans la direction transversale (Y) dans la position de service respective ou étant déplaçable(s) entre la zone d'usinage (B) et la zone de service (S).

14. Installation d'usinage selon l'une quelconque des revendications 11 à 13, **caractérisée en ce que** la plateforme de service (16) est fixée de manière permanente au bâti (18), notamment à la partie de bâti latérale (18b), dans la direction longitudinale (X) et/ou dans la direction transversale (Y) et/ou dans la direction verticale (Z).

15. Procédé d'usinage d'un composant structurel d'avion (2) avec une installation d'usinage (1) selon l'une quelconque des revendications précédentes,
**caractérisé en ce que**
à des fins de service, l'outil supérieur (13) et l'outil inférieur (15) sont déplacés chacun dans la position de service ou dans au moins une position de service, de telle sorte que l'outil supérieur (13) et l'outil inférieur (15) sont accessibles depuis la plate-forme de service commune (16).
